(19) **Europäisches Patentamt**
**European Patent Office**
**Office européen des brevets**

(11) **EP 1 463 599 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: **02796698.5**

(22) Anmeldetag: **20.12.2002**

(51) Int Cl.:
***B23K 1/00*** (2006.01)   ***F01N 3/28*** (2006.01)

(86) Internationale Anmeldenummer:
**PCT/EP2002/014635**

(87) Internationale Veröffentlichungsnummer:
**WO 2003/055631 (10.07.2003 Gazette 2003/28)**

(54) **WABENSTRUKTUR UND VERFAHREN ZU DEREN BELEIMUNG UND BELOTUNG**

HONEYCOMB STRUCTURE AND METHOD FOR GLUEING AND SOLDERING SAID STRUCTURE

STRUCTURE ALVEOLAIRE ET PROCEDE DE COLLAGE ET DE BRASAGE DE CETTE STRUCTURE

(84) Benannte Vertragsstaaten:
**DE ES FR GB IT**

(30) Priorität: **03.01.2002 DE 10200069**

(43) Veröffentlichungstag der Anmeldung:
**06.10.2004 Patentblatt 2004/41**

(73) Patentinhaber: **Emitec Gesellschaft für Emissionstechnologie mbH**
**53797 Lohmar (DE)**

(72) Erfinder:
• **BRÜCK, Rolf**
  **51429 Bergisch Gladbach (DE)**
• **ALTHÖFER, Kait**
  **51674 Wiehl (DE)**
• **HODGSON, Jan**
  **53842 Troisdorf (DE)**
• **ROLLE, Arndt-Udo**
  **53721 Siegburg (DE)**

(74) Vertreter: **Kahlhöfer, Hermann**
**Kahlhöfer Neumann Herzog Fiesser,**
**Patentanwälte,**
**Karlstrasse 76**
**40210 Düsseldorf (DE)**

(56) Entgegenhaltungen:
**WO-A-00/44522**

EP 1 463 599 B1

**Beschreibung**

Die Erfindung betrifft eine Wabenstruktur umfassend zumindest teilweise strukturierte Folien, so dass für ein Fluid durchströmbare Kanäle mit einem Pitch und einer Wellhöhe gebildet sind, wobei in Kontaktbereichen der Folien miteinander innerhalb einer Leimstreifenbreite Leim und ein pulverförmiges Lot vorgesehen ist sowie ein Verfahren zum Beleimen und Beloten einer solchen Wabenstruktur. Die gattung ist der WO-A-0044522 zu entnehmen.

Derartige Wabenstrukturen dienen insbesondere als Katalysator-Trägerkörper in Abgassystemen mobiler Verbrennungskraftmaschinen (z.B. Otto- oder Dieselmotoren oder dergleichen). Solche Wabenkörper sowie ein Verfahren zu deren Herstellung gehen beispielsweise aus der EP 0 422 000 B1 oder der Offenlegungsschrift DE 29 24 592 hervor. Letztere beschreibt eine Trägermatrix für einen katalytischen Reaktor zur Abgasreinigung einer Brennkraftmaschine eines Fahrzeuges, welche aus hochtemperaturfesten Stahlblechen gebildet ist. Die Trägermatrix wird mit einem Katalysatormaterial beschichtet, wobei die Stahlbleche als glatte und gewellte Bleche ausgebildet und abwechselnd lagenweise angeordnet sind.

Im Hinblick auf das Herstellungsverfahren einer solchen Trägermatrix wird vorgeschlagen, dass die Stahlbleche zunächst entfettet und/oder gebeizt werden. Anschließend und vor dem abwechselnd lagenweisen Anordnen werden die Stahlbleche mit einem Lotauftrag versehen. Hierbei können die glatten, die gewellten oder beide Arten von Stahlblechen beleimt bzw. belotet werden. Der Lotauftrag erfolgt streifenförmig in Richtung der Wellen der gewellten Stahlbleche oder senkrecht dazu. Nachdem die Stahlbleche gestapelt und zu einer Trägermatrix gewunden wurden, wird die Trägermatrix aufgeheizt und eine gleichzeitige Verlötung aller Lagen bzw. Stahlbleche miteinander bewirkt. Eine Vielzahl von Formen bzw. Anordnungen der Bleche zueinander sind bereits bekannt (S-förmig, spiralig, etc.), wobei diesbezüglich beispielsweise auf die EP 0 430 975 oder EP 0 436 533 hingewiesen wird.

Dieses Verfahren hat sich zwar in der Vergangenheit sehr gut bewährt, bietet aber gerade im Hinblick auf die Kosten und die Verlötungsqualität Nachteile auf Zwar bedeutet die Vorsehung von Leim bzw. Lot in Form von Streifen bereits eine Reduzierung des zur Herstellung eingesetzten Leims bzw. Lots, allerdings ist im Rahmen von Belastungsversuchen dennoch eine zum Teil ungewünschte, zu steif ausgeführte Verbindung der Stahlbleche miteinander erkannt worden. In diesem Zusammenhang hat sich weiter herausgestellt, dass es gerade bei der Verwendung von sehr dünnen Stahlblechen wichtig ist, nicht zuviel Lotmaterial in die Trägermatrix einzuleiten, da eine übermäßige Lotmenge während der Anwendung einer solchen Trägermatrix im Abgassystem von Automobilen eine erhöhte Korrosionsgefahr zur Folge hat. Außerdem stellt die übermäßige Bereitstellung von Lotmaterial einen Kostenfaktor dar, der insbesondere im Rahmen einer Großserienfertigung zu beachten ist.

Ein weiteres fertigungstechnisches Problem tritt beim Stapeln bzw. Wickeln der Stahlbleche auf. Da das Lotmaterial bereits vor dem Stapeln bzw. Wickeln aufgetragen wird, kann sich dieses auch in den Kontaktbereichen zwischen dem gewellten und dem glatten Stahlblech anordnen, so dass ein direkter Kontakt dieser Bleche nicht sichergestellt ist. Bei einer nachträglichen thermischen Behandlung verdampft der Leim zumindest teilweise und das Lotmaterial schmilzt, so dass unter Umständen Spalte gebildet werden. Dies kann zur Folge haben, dass eine fügetechnische Verbindung von benachbart zueinander angeordneten Stahlblechen nicht durchgängig über den gewünschten Verbindungsbereich ausgeführt ist. Dies hat einen merkbaren Einfluss auf die Dauerfestigkeit einer solchen Trägermatrix, wenn diese den thermischen und dynamischen Bedingungen im Abgassystem einer mobilen Verbrennungskraftmaschine ausgesetzt wird.

Hiervon ausgehend ist es Aufgabe der vorliegenden Erfindung, die bezüglich der bekannten Wabenkörper und seiner Herstellung aufgezeigten Probleme zumindest teilweise zu beseitigen. Insbesondere soll ein Wabenkörper angegeben werden, der eine dauerhafte Verbindung benachbart angeordneter Bleche sicherstellt, sowie ein Verfahren anzugeben, bei dem unabhängig von der bereitgestellten Lotmenge nur so viel Lotmaterial in den Kontaktbereichen benachbart zueinander angeordneter Bleche angelagert wird, wie dies zur Ausbildung dauerhafter Verbindungen erforderlich ist.

Diese Aufgaben werden gelöst durch ein Verfahren mit den Merkmalen des Patentanspruchs 1 sowie einer Wabenstruktur gemäß den Merkmalen des Patentanspruchs 13. Weitere vorteilhafte Ausgestaltungen sind in den jeweils abhängigen Ansprüchen beschrieben, wobei die dort offenbarten Merkmale einzeln oder in Kombination miteinander vorliegen können.

Insofern wird ein Verfahren zum Beleimen und Beloten einer Wabenstruktur umfassend mindestens eine zumindest teilweise strukturierte bzw. gewellte Folie mit einem Pitch und einer Wellhöhe vorgeschlagen, welches folgende Schritte umfasst:

- Auswahl eines mittleren Lotdurchmessers eines pulverförmigen Lots, der betragsmäßig kleiner als 15% der Wellhöhe ist;
- Bestimmen einer minimalen Leimstreifenbreite nach der Gleichung

$$B = 2 \cdot \sqrt{D \cdot \left[ \frac{1}{4} \cdot \frac{P}{W} - 0{,}0156 \right]}$$

mit B = Leimstreifenbreite,
D = Lotdurchmesser,
P = Pitch und

W = Wellhöhe;

- Beleimen wenigstens der zumindest teilweise strukturierten Folie innerhalb der Leimstreifenbreite auf mindestens einem Teil von durch die Wellung gebildeten Wellenbergen (Wellenberge sind die Kuppen, Erhebungen oder Extrempunkte auf beiden Seiten der Folie, an denen benachbarte Folien anliegen können);
- Beloten der Wabenstruktur.

Die Wahl eines geeigneten mittleren Lotkorndurchmessers wird im wesentlichen durch die Foliendikke bestimmt, da sichergestellt werden soll, dass eine Auflegierung der Folie nicht stattfindet. Weiterhin ist für den Fachmann klar ersichtlich, dass die verwendete Foliendicke auch in Korrelation zu der erzielbaren Kanaldichte der Wabenstruktur und somit auch zu der Wellhöhe der strukturierten Folie steht. Deshalb wird hier ein mittlerer Lotkorndurchmessers vorgeschlagen, der betragsmäßig kleiner als 15%, insbesondere kleiner 10%, bevorzugt kleiner 8%, der Wellhöhe ist. Beträgt die Wellhöhe beispielsweise 0,73 mm, wie sie in etwa bei einer Wabenstruktur mit 1000 cpsi auftreten kann, so ist demnach ein mittlerer Lotkorndurchmesser kleiner als 110 $\mu$m zu wählen.

Demnach ist die Wabenstruktur mit mindestens einer strukturierten Folie ausgebildet, wobei bevorzugt eine Mehrzahl von strukturierten Folien verwendet wird. Die Strukturierung kann über die gesamte Breite und/ oder Länge der Folie durchgehend ausgeführt sein oder auch Abschnitte mit glatten Passagen aufweisen. Struktur in diesem Sinne ist beispielsweise eine Wellung oder eine Faltung der Folie, wobei bevorzugt eine regelmäßige Struktur ausgebildet ist. Als besonders geeignet haben sich Strukturen erwiesen, welche im wesentlichen einer Sinus-Wellung oder einer Evolventen-Wellung ähneln, welche gegebenenfalls auch lokal unterbrochen oder von einer anderen (Makro- bzw. Mikro-)Struktur überlagert sein kann. Die Strukturierung hat bevorzugt in regelmäßigen Abständen Extrempunkte, z. B. Hochpunkte und Tiefpunkte. Dabei wird der Abstand zweier benachbarter Hochpunkte mit Pitch (einer Art Wellenlänge) bezeichnet, während die Wellhöhe (eine Art Amplitude) den Abstand der gedachten Verbindungslinien von jeweils Hoch- und Tiefpunkten definiert und insbesondere quer bzw. senkrecht zum Pitch ausgerichtet ist.

Die Beleimung der strukturierten Folie (insbesondere aus einem Aluminium-Chrom-Stahl) erfolgt im wesentlichen entlang der Extrempunkte der Struktur. Dabei ist die Leimstreifenbreite bevorzugt symmetrisch bezüglich der Extrempunkte angeordnet, wobei ca. die Hälfte der Leimstreifenbreite jeweils in der direkten Nachbarschaft der Extrempunkte angeordnet ist. Die Leimstreifenbreite definiert somit den Bereich auf der strukturierten Folie, in dem ein Leim oder Haftmittel vorzusehen ist, welches der Fixierung von Lotkörnern dient. In Anbetracht der Tatsache, dass die Extrempunkte nachfolgend zur Anlage an benachbart angeordneten Folien dienen, wobei ein Kontaktbereich definiert wird, ist es erforderlich, gerade in diesem Kontaktbereich ausreichend Lotmaterial zu fixieren, um bei einer abschließenden thermischen Behandlung im Kontaktbereich eine fügetechnische Verbindung zu gewährleisten. Hierbei spielen insbesondere die Lotkorngröße sowie die räumliche Anordnung der benachbarten Folien zueinander eine wesentliche Rolle.

Entsprechend der Ausgestaltung der Struktur (insbesondere dem Verhältnis von Pitch zu Wellhöhe) ändert sich die räumliche Anordnung der benachbarten Folien zueinander, so dass beispielsweise relativ flache oder relativ steile Zwickel im Kontaktbereich gebildet werden. Nun ist ersichtlich, dass in Abhängigkeit der verwendeten Lotkorngröße eine Anordnung des Lotkorns relativ nahe zum Extrempunkt möglich ist, wenn die Flanken der strukturierten Folie steil sind, also das Verhältnis aus dem Pitch und der Wellhöhe klein ist. Soll nun lediglich die Lotmenge in dem Kontaktbereich fixiert werden, welche tatsächlich für die Ausbildung einer fügetechnischen Verbindung der benachbarten Folien erforderlich ist, ist die Leimstreifenbreite so auszuführen, dass es lediglich der gewünschten Anzahl von Lotkörnern mit einem vorgegebenen mittleren Lotdurchmesser möglich ist, sich in dem Kontaktbereich anzuordnen. Dabei wird beispielsweise vermieden, dass sich Leim an den Flanken der strukturierten Folie ansammelt, was ggf. eine Anlagerung von nicht benötigtem Lotmaterial zur Folge hätte.

Gemäß einer weiteren Ausgestaltung des Verfahrens wird vorgeschlagen, die Leimstreifenbreite um eine Zusatzbreite (Z) zu vergrößern, wobei die Zusatzbreite in einem Bereich zwischen 0,2 · D (= Lotkorndurchmesser) < Z < D liegt. Insofern entspricht die Leimstreifenbreite der folgenden Gleichung

$$W_z = B + Z.$$

Diese Zusatzbreite ist ggf. erforderlich, wenn besonders hohe thermische und/oder dynamische Belastungen während des späteren Einsatzes auftreten. Insofern wird die Leimstreifenbreite um einen Betrag vergrößert, so dass sich beispielsweise ein zusätzliches Lotkorn (mit gleichem oder u.U. sogar nur mit einem kleineren Lotkomdurchmesser) anordnen kann. Das Verfahren bietet demnach die Möglichkeit, die Ausbildung der fügetechnischen Verbindungen mit einer Art Sicherheitsfaktor durchzuführen, wobei eine zusätzliche, genau definierte Menge des Lotmaterials nahe der Kontaktstelle fixiert wird. Eine solche Anordnung von zusätzlichem Lotmaterial ist beispielsweise auch vorteilhaft, wenn die Wabenstruktur relativ dickwandige Folien (z.B. mit einer Foliendicke größer als 60 $\mu$m) umfasst. Die dickwandigen Folien sind im Vergleich zu den dünneren Folien relativ starr ausgebildet, so dass sich beim Wickeln der Folien Spalte im Kontaktbereich bilden können, welche dann durch das zusätzlich fixierte Lotmaterial überbrückt werden.

Gemäß noch einer weiteren Ausgestaltung des Verfahrens wird die Leimstreifenbreite mittels eines Korrekturwertes (K) bestimmt, der in einem Bereich von 0 mm bis 1 mm liegt, und von der Leimstreifenbreite abgezogen oder hinzugefügt wird. Demnach bestimmt sich die Leimstreifenbreite unter Berücksichtigung der Zusatzbreite und des Korrekturwertes gemäß folgender Gleichung:

$$B_{Z,K} = B + Z \pm K.$$

Dieser Korrekturwert ist insbesondere im Hinblick auf die ausgebildete Struktur der Folie zu wählen. Während die oben angegebene Gleichung zur Bestimmung der minimalen Leimstreifenbreite eine im wesentlichen sinusartige Wellung zugrundelegt, erlaubt der Korrekturwert eine Anpassung dieser Berechnung für beispielsweise rechteckige Wellformen. Bei solchen, insbesondere sehr steile Flanken aufweisenden Wellformen werden voneinander stark abweichende Zwickelformen generiert. Gerade bei diesen Ausgestaltungen kommt es zu einer deutlichen Veränderung des Pitch-Wellhöhen-Verhältnisses, ohne dass die Lage eines zu fixierenden Lotkorns näher an den Kontaktbereich ausgeführt werden kann, und die Leimstreifenbreite somit im wesentlichen unverändert ist. Dieser Effekt lässt sich mittels des Korrekturwertes ausgleichen.

Weiter wird vorgeschlagen, dass die zumindest teilweise strukturierte Folie zunächst mit dem Leim versehen, dann eine Wabenstruktur ausgebildet (z.B. durch Stapeln und/oder Wickeln der Folien) und später ein stirnseitiges Beloten der Wabenstruktur vorgenommen wird. Dadurch wird verhindert, dass sich das Lotmaterial zwischen den Folien anordnet, und auf diese Weise die benachbarten Folien voneinander beabstandet sind. Dies hätte bei einer nachfolgenden thermischen Behandlung ggf. zur Folge, dass das bereitgestellte Lotmittel lediglich an einer der miteinander zu verbindenden Folien angelagert wird, und somit nicht zur Ausbildung von fügetechnischen Verbindungen dient. Dieser Effekt wird hierbei vermieden, da die Folien vor dem Wickeln lediglich mit dem Leim versehen sind. Erst wenn die Folien ihre letztendliche Position zueinander eingenommen haben (z. B. im gewundenen bzw. gewickelten Zustand), erfolgt die Zufuhr des Lotmittels über die Stirnseite der Wabenstruktur. Das Lotmittel bleibt dabei an dem Leim innerhalb der Leimstreifenbreite haften.

Prinzipiell sei an dieser Stelle angemerkt, dass die Wabenstruktur neben den zumindest teilweise strukturierten Folien zusätzlich auch glatte Folien aufweisen kann, wobei jeweils eine glatte und eine gewellte Folie abwechselnd benachbart zueinander angeordnet werden kann. Die Folien können beispielsweise S-förmig gewunden, eben zueinander gestapelt oder spiralig aufgewickelt werden, um die gewünschte Gestalt der Wabenstruktur zu bilden. Die Wabenstruktur selbst kann demnach einen rechteckigen, ovalen oder einen zylindrischen Aufbau aufweisen. Entsprechend der ausgewählten Folien-Arten entstehen Kontaktbereiche zwischen strukturierten Folien oder zwischen strukturierten oder glatten Folien oder zwischen glatten Folien. Besonders bevorzugt ist dabei die Ausgestaltung der Wabenstruktur mittels mindestens einer zusätzlichen glatten Folie, wobei im Hinblick auf das Herstellungsverfahren die mindestens eine strukturierte und die mindestens eine glatte Folie so gestapelt und/oder gewunden werden, dass für ein Fluid durchströmbare Kanäle gebildet werden. Mit Fluiden sind hierbei insbesondere gasförmige Fluide und speziell Abgase mobiler Verbrennungskraftmaschinen gemeint. Die Kanäle verlaufen bevorzugt im wesentlichen parallel zueinander von einer Stirnseite der Wabenstruktur bis zu einer gegenüberliegenden.

Gemäß noch einer weiteren Ausgestaltung des Verfahrens ist die Leimstreifenbreite kleiner als 1,75 mm auszuführen, insbesondere kleiner 1 mm, und bevorzugt kleiner 0,5 mm. Nachdem gemäß der oben genannten Gleichung im wesentlichen die untere Grenze hinsichtlich der Leimstreifenbreite angegeben wird, bei der eine dauerhafte Verbindung der zueinander benachbart angeordneten Folien sichergestellt werden, wird nun eine Obergrenze vorgeschlagen, die eine übermäßige Verwendung von Lotmaterial verhindern soll. In diesem Zusammenhang ist zu berücksichtigen, dass im allgemeinen kein pulverförmiges Lot vorliegt, welches stets den gleichen Lotkorndurchmesser aufweist. Üblicherweise werden die Lotpulver in einer Lotpulverfraktion bereitgestellt, wobei eine Gaußsche Verteilung anzunehmen ist, deren Maxima in etwa bei der angegebenen Lotkorngröße liegt. Für das vorgeschlagene Verfahren ist insbesondere eine Lotkornfraktion zu wählen, welche deutlich strengeren Kriterien als einer üblichen Gaußschen Verteilung genügt. Insofern werden Lotkornfraktionen mit einem mittleren Lotdurchmesser bevorzugt, deren Varianz kleiner als 0,8, insbesondere kleiner 0,5 und besonders bevorzugt kleiner 0,3 ist. So kann sichergestellt werden, dass tatsächlich im Querschnitt der Wabenstruktur jeweils nur die gewünschte Lotmenge, insbesondere nur ein Lotkom, in jedem Zwickel angeordnet ist.

Nach einer weiteren Ausgestaltung des Verfahrens wird die Beleimung der Wabenstruktur nur über mindestens einen Teilbereich in Richtung einer Achse der Wabenstruktur vorgenommen. Das bedeutet, dass die Leimstreifenbreite ggf. über die Länge der strukturierten Folie unterbrochen ist, oder nur einen Teilbereich ausgehend von der Stirnseite bzw. lediglich im dazwischen liegenden Teilbereich ausgebildet ist. Das hat beispielsweise zur Folge, dass lediglich der Eintritts- und/oder der Austrittsbereich der Wabenstruktur nahe den Stirnseiten fügetechnisch miteinander verbunden werden. Dies hat den Vorteil, dass die Wabenstruktur eine Möglichkeit zur Kompensierung des thermischen Ausdehnungsverhaltens aufweist, da dies gerade während des Aufheiz- bzw. Abkühlvorgangs zu unterschiedlichen Längenänderungen im Inneren der Wabenstruktur gegenüber den außenliegenden Bereichen führt.

Besonders bevorzugt ist ein Leim zu verwenden, der zwei gezielt einstellbare Hafteigenschaften aufweist, die jeweils wiederholbar aktivierbar bzw. deaktivierbar sind. Das bedeutet beispielsweise, dass der Leim zunächst eine adhäsiv wirksame Eigenschaft aufweist, diese unter bestimmten Umständen deaktiviert und durch weitere Maßnahmen seine adhäsive Hafteigenschaft wieder zurückgewinnt. Dabei ist es besonders vorteilhaft zur Herstellung des Wabenkörpers, einen solchen Leim zu verwenden, wobei

- eine adhäsive Hafteigenschaft des Leims, welcher sich außerhalb der Leimstreifenbreite angesammelt hat, vor dem Beloten deaktiviert wird und/oder
- eine adhäsive Hafteigenschaft des Leims, welcher sich innerhalb der Leimstreifenbreite angesammelt hat, vor dem Beloten aktiviert wird.

Die Verwendung eines derartigen Leims hat beispielsweise den Vorteil, dass die adhäsive Hafteigenschaft während des Wickelns und/oder während des Stapelns deaktiviert werden kann, so dass ein Aufeinandergleiten der benachbart angeordneten Folien gewährleistet ist. Weiterhin bietet der Leim den Vorteil, dass dem Leim, welcher aufgrund fertigungstechnischer Toleranzen außerhalb der Leimstreifenbreite angeordnet wurde, seine adhäsive Hafteigenschaft gezielt entzogen werden kann, so dass eine Fixierung von Lotkörnern in diesem Abschnitt nicht stattfindet. Zur gezielten Einstellung der Hafteigenschaften des Leims dienen beispielsweise Temperaturveränderungen und/oder die Zugabe von Substanzen, die chemisch mit dem Leim reagieren. Zu weiteren Eigenschaften des Leims sei an dieser Stelle auf die WO 95/30508 verwiesen, deren gesamter Offenbarungsinhalt somit auch hier integriert ist.

Nach einer weiteren Ausgestaltung des Verfahrens beträgt der mittlere Lotdurchmesser des pulverförmigen Lots zwischen 40 $\mu$ und 120 $\mu$. Wie bereits ausgeführt, ist dabei eine besonders kleine Varianz zu gewährleisten. Die Wahl des Lotdurchmessers erfolgt insbesondere im Hinblick auf die bereitzustellende Lotmenge zur Ausbildung einer fügetechnischen Verbindung, welche auch den thermischen (bis 1000°C) und dynamischen (Fahrzeugvibrationen, Druckstöße des Abgases) Bedingungen im Abgassystem eines Pkws standhalten. Da üblicherweise das pulverförmige Lot jeweils nur in bestimmten Größen angeboten wird (z. B. 106 $\mu$, 75 $\mu$, 50 $\mu$) sind ggf. zwei kleinere Lotkörner statt einem größeren Lotkorn pro Zwickel im Querschnitt der Wabenstruktur vorzusehen, da die benötigte Menge so exakter eingestellt werden kann.

Gemäß einer weiteren Ausgestaltung des Verfahrens wird nach dem Beloten bzw. nach einer anschließenden thermischen Behandlung der Wabenstruktur eine Lotstreifenbreite (L) generiert, die im wesentlichen gegenüber der Leimstreifenbreite nur eine Toleranz von maximal 10 %, bevorzugt von maximal 5 % hat und insbesondere nicht größer als die Leimstreifenbreite ist. Das bedeutet, dass sehr begrenzte, in den Zwickeln verlaufende Lotstreifen gebildet werden. Dies hat zur Folge, dass die Flanken der Folien bzw. der überwiegende Teil der Kanalwände frei von Lotmaterial sind, wodurch die Korrosionsbeständigkeit der Wabenstruktur verbessert wird. Zusätzlich wird der Kanalquerschnitt nicht unnötig verengt, was einen erhöhten Staudruck des die Wabenstruktur durchströmenden Abgases zur Folge hätte.

Weiterhin wird vorgeschlagen, dass die Wabenstruktur vor dem Beloten zumindest teilweise in ein Gehäuse eingebracht wird. Das hat zur Folge, dass eine aufwendige Fixierung der Vielzahl von Folien während des Belotungsvorganges vermieden wird, da diese bereits durch das Gehäuse umschlossen werden. Ein nur teilweises Einbringen ist insbesondere dann vorteilhaft, wenn der äußere Umfang der Wabenstruktur auch mit einem Lotmittel versehen werden soll, welches zur Anbindung der Wabenstruktur an das Gehäuse dient. Da das Mantelrohr bzw. Gehäuse aufgrund der größeren thermischen Masse (größere Materialstärke von ca. 0,8-1,5mm) gegenüber den Folien ein anderes thermisches Ausdehnungsverhalten aufweist, wird diese Verbindung zwischen Wabenstruktur und Gehäuse bevorzugt nur an einer Stirnseite der Wabenstruktur durchgeführt. Nach dem Beloten wird dann die Wabenstruktur vollständig in das Gehäuse eingeführt, wobei bei einer anschließenden thermischen Behandlung die Folien miteinander sowie die Folien mit dem Gehäuse verlötet werden.

Gemäß einem weiteren Aspekt der Erfindung wird eine Wabenstruktur vorgeschlagen, welche zumindest teilweise strukturierte Folien umfasst, so dass für ein Fluid durchströmbare Kanäle mit einem Pitch und einer Wellhöhe gebildet sind, wobei in Kontaktbereichen der Folien miteinander innerhalb einer Leimstreifenbreite Leim und ein pulverförmiges Lot mit einem mittleren Lotdurchmesser vorgesehen ist. Die Wabenstruktur zeichnet sich erfindungsgemäß dadurch aus, dass die Leimstreifenbreite und der Lotdurchmesser im wesentlichen dem folgenden Zusammenhang entsprechen:

$$B = 2 \cdot \sqrt{D \cdot \left[ \frac{1}{4} \cdot \frac{P}{W} - 0,0156 \right]}.$$

Wie bereits oben ausgeführt, kann diese Gleichung auch um eine Zusatzbreite (Z) bzw. den Korrekturwert (K) ergänzt werden. Dabei ist zu berücksichtigen, dass es sich bei der hier beschriebenen Wabenstruktur um eine Art Halbzeug handelt, da im Prinzip der Zustand vor einer thermischen Behandlung, insbesondere dem Lötprozess, beschrieben ist. Im Laufe des Lötverfahrens verflüchtigen sich einige Bestandteile des Leims, so dass nach einer solchen thermischen Behandlung die Leimstreifenbreite nicht mehr erkennbar ist. Nichts desto trotz lässt sich die Verwendung eines solchen Halbzeuges zur Herstellung bereits gelöteter Wabenkörper nachvollziehen.

Die Wabenstruktur umfasst bevorzugt auch glatte Folien, wobei die Wabenstruktur gemäß einer weiteren Ausgestaltung Folien mit einer Foliendicke kleiner 180 μm, insbesondere kleiner 100 μm und bevorzugt kleiner 40 μm hat. Von besonderer Bedeutung ist die exakte Zuführung von Lotmaterial bei Folien mit einer Foliendicke kleiner als 20 μm und insbesondere bei Folien mit einer Foliendicke kleiner 15 μm, da bei diesen extrem dünnen Folien eine verhältnismäßig hohe Lotmittelkonzentration vorliegt, die ggf. einem merklichen Einfluss auf die Zusammensetzung der Folie zur Folge hat. Somit ist die Herstellung eines Wabenkörpers gemäß dem obigen Verfahren gerade im Hinblick auf diese extrem dünnen Foliendicken geeignet.

Hinsichtlich der Ausgestaltung der Struktur wird vorgeschlagen, dass die Wellhöhe (W) zwischen 4 mm und 0,5 mm und/oder der Pitch (P) zwischen 6 mm und 0,8 mm beträgt. Die exakte Beleimung, insbesondere gemäß dem vorgeschlagenen Verfahren, ist von besonderer Bedeutung bei relativ hochzelligen Wabenstrukturen mit verhältnismäßig kleiner Wellhöhe und/oder kleinem Pitch. Dies bezieht sich bevorzugt auf eine Wellhöhe kleiner 1 mm, insbesondere kleiner 0,75 mm, bzw. auf einen Pitch kleiner 2 mm, insbesondere kleiner 1,5 mm. Bei der vorgeschlagenen Wellhöhe bzw. dem vorgeschlagenen Pitch werden Kanäle gebildet, welche einen hinsichtlich des Strömungswiderstandes geeigneten Querschnitt aufweisen. Zudem muss berücksichtigt werden, dass die Folien zumeist noch mit einer Wash-Coat-Beschichtung versehen werden, welche mit dem katalytisch aktiven Material imprägniert ist. Der Wash-Coat hat die Aufgabe, eine besonders zerklüftete, große Oberfläche in den Kanälen bereitzustellen, so dass ein intensiver Kontakt des katalytisch aktiven Materials mit dem Abgas gewährleistet ist. Werden zu schlanke Kanalformen gewählt, kann dies zu verstopften Kanälen führen, was negative Auswirkungen auf den Abgasstaudruck vor einem solchen Wabenkörper zur Folge hat.

Zwar ist dieses Verfahren für alle bekannten Kanaldichten von 200 cpsi ("cells per square inch") bis über 1600 cpsi geeignet, besonders vorteilhaft ist es jedoch für eine Wabenstruktur, welche eine Kanaldichte größer 600 cpsi hat, insbesondere sogar größer 800 cpsi. Die Wahl der Kanaldichte, welche die Anzahl von Kanälen in einer Einheitsfläche des Querschnitts der Wabenstruktur beschreibt, wird im wesentlichen durch den Einsatz der Wabenstruktur bestimmt. Weiterhin werden z. B. die Foliendicke und/oder die Wellform berücksichtigt.

Gemäß einer weiteren Ausgestaltung des Wabenkörpers weist wenigstens eine Folie eine Sekundärstruktur auf, welche einen Teilbereich definiert und die Ausdehnung der Leimstreifenbreite in Richtung einer Achse der Wabenstruktur begrenzt. Mit Sekundärstruktur ist dabei eine Verformung der Folie gemeint, welche punktuell und/oder im wesentlichen quer zur Struktur der strukturierten Folien verläuft. Weiter ist diese Sekundärstruktur deutlich kleiner bzw. flacher auszuführen, so dass die Sekundärstruktur beispielsweise eine Sekundärwellhöhe aufweist, die ggf. kleiner 20 %, insbesondere kleiner 10 % und bevorzugt kleiner 5 % der Wellhöhe der strukturierten Folie ist. Die Sekundärstruktur generiert eine Begrenzung der Leimstreifenbreite in Richtung der Achse bzw. in Richtung der Erstreckung der Extrempunkte (Wellenberge oder Wellentäler). Weiterhin kann die Sekundärstruktur beispielsweise die Funktion einer Gleitschiene haben. Dies gilt insbesondere dann, wenn die Gleitschienen am Rand der Leimbereiche und/oder außerhalb angeordnet sind. Diese erleichtern das aufeinander Abgleiten der Folien beim Wickeln, so dass ein Verschmieren des Leims und/oder ein in dieser Phase unerwünschtes aneinander Haften der Folien vermieden wird.

Weiterhin wird vorgeschlagen, dass wenigstens eine Folie eine Passivierungsschicht aufweist, welche einen Teilbereich definiert und die Ausdehnung der Leimstreifenbreite in Richtung einer Achse der Wabenstruktur begrenzt. Mit Passivierungsschicht ist dabei beispielsweise eine chemische Substanz gemeint, welche einen Einfluss auf die Hafteigenschaft des Leims hat, so dass beispielsweise der Leim, welcher außerhalb der gewünschten Leimstreifenbreite angeordnet ist, durch Kontakt mit der Passivierungsschicht deaktiviert wird, also seine adhäsive Hafteigenschaft (ggf. dauerhaft) verliert. Insofern kann die Passivierungsschicht nicht nur zur Begrenzung eines axialen Teilbereichs herangezogen werden, sondern u. U. auch dazu beitragen, dass die Flanken der strukturierten Folien außerhalb der gewünschten Leimstreifenbreite keinen adhäsiv wirksamen Leim aufweisen.

Die Erfindung wird nachfolgend anhand der Zeichnungen näher erläutert. Dabei sei darauf hingewiesen, dass die dargestellten Ausführungsbeispiele nicht den Erfmdungsgedanken begrenzen, sondern lediglich besonders bevorzugte und im Hinblick auf eine detaillierte Erläuterung geeignete Beispiele zeigen.

Es zeigen:

Fig. 1 eine stirnseitige Ansicht einer Wabenstruktur mit Mantelrohr vor dem Lötprozeß,

Fig. 2 schematisch den Aufbau der Wabenstruktur in einer Detailansicht,

Fig. 3 eine Vorrichtung zum Beleimen einer strukturierten Folie,

Fig. 4 eine weitere Ausgestaltung der Wabenstruktur, und

Fig. 5 schematisch den Ablauf einer Ausgestaltung des vorgeschlagenen Verfahrens.

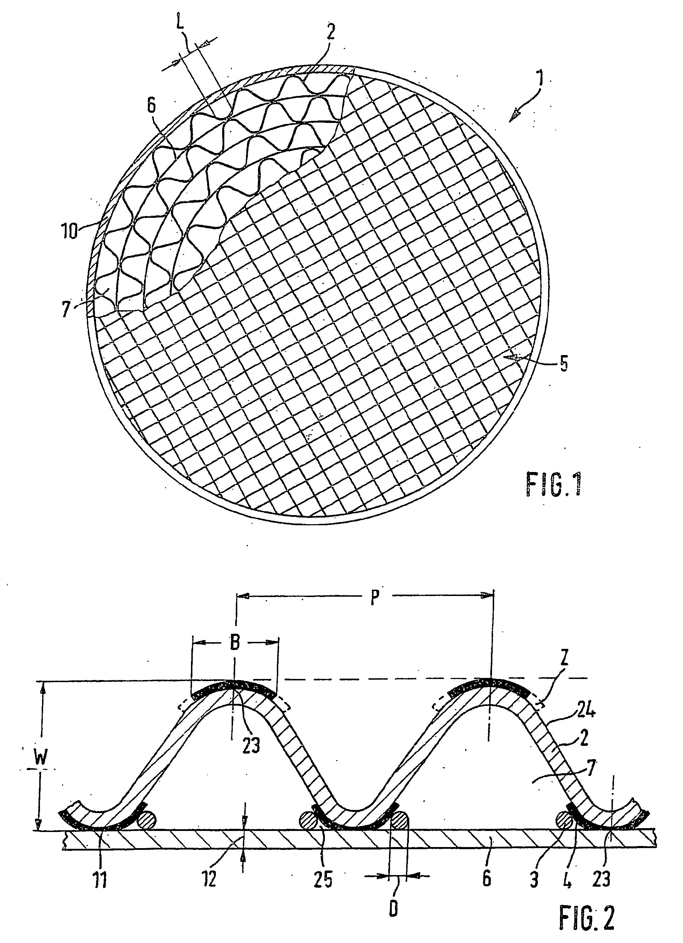

Fig. 1 zeigt in einer stirnseitigen Ansicht eine Wabenstruktur 1, welche bereits in ein Gehäuse 10 vollständig eingebracht ist. Die eine Stirnseite 5 ist stark schematisiert dargestellt, wobei ein Teilschnitt detailliert zeigt, dass die Wabenstruktur 1 aus glatten Folien 6 und strukturierten Folien 2 aufgebaut ist, welche spiralig aufgewickelt sind. Dabei ist erkennbar, dass die strukturierte Folie 2 und die glatten Folie 6 Kanäle 7 definieren, welche für ein Abgas durchströmbar sind. Die Kanäle 7 weisen im wesentlichen einen gleichen Kanalquerschnitt auf und erstrecken sich nahezu parallel zueinander von einer Stirnseite 5 der Wabenstruktur 1 bis zur gegenüberliegenden Stirnseite. Die Wabenstruktur 1 ist nach dem Belotungsschritt dargestellt, wobei im Kontaktbereich der Folien miteinander eine Lotstreifenbreite L ausgebildet ist. Die Lotstreifenbreite L beschreibt insbesondere einen Bereich nahe des Kontaktbereiches, in dem in Richtung des Kanalverlaufs eine Vielzahl von Lotkörnern hintereinander angeordnet sind.

Fig. 2 zeigt in einer Detailansicht schematisch den Aufbau einer Wabenstruktur 1. Dabei ist eine strukturierte Folie 2 und eine glatte Folie 6 (im nicht gebogenen Zustand) dargestellt, welche einen Berührpunkt bzw. Kontaktbereich 11 ausbilden und Kanäle 7 begrenzen. Die strukturierte Folie 2 hat einen Pitch P, welcher die Entfernung zweier benachbarter Extrempunkte 23 (von Hochpunkt zu Hochpunkt bzw. von Tiefpunkt zu Tiefpunkt) beschreibt. Weiterhin ist die Struktur durch die Wellhöhe W gekennzeichnet, welche den Abstand zweier entgegengesetzter Extrempunkte 23 (Hochpunkt zu Tiefpunkt) beschreibt. Nahe dem Kontaktbereich 11 werden Zwickel 25 gebildet, deren räumliche Gestaltung im wesentlichen von der Steigung einer Flanke 24 der strukturierten Folie abhängt. Die strukturierten Folien 2 und/oder die glatten Folien 6 weisen dabei eine vorgegebene Foliendicke 12 auf.

Weiter ist der Fig. 2 die Leimstreifenbreite B zu entnehmen, welche bevorzugt symmetrisch zu den Extrempunkten 23 angeordnet ist. Die Leimstreifenbreite B kann um eine Zusatzbreite Z vergrößert werden, wobei diese bevorzugt auf beiden Seiten der Beleimstreifenbreite hinzugefügt wird. Die Leimstreifenbreite B ist dabei so gewählt, dass nur die erforderliche Menge des pulverförmigen Lots 3 infolge der adhäsiven Wirkung des Leims 4 in den Zwickeln 25 angelagert wird. Dabei handelt es sich bevorzugt um lediglich einige wenige, insbesondere nur um zwei und besonders bevorzugt nur um ein einziges Lotkorn pro Zwickel 25 mit einem mittleren Lotkorndurchmesser D.

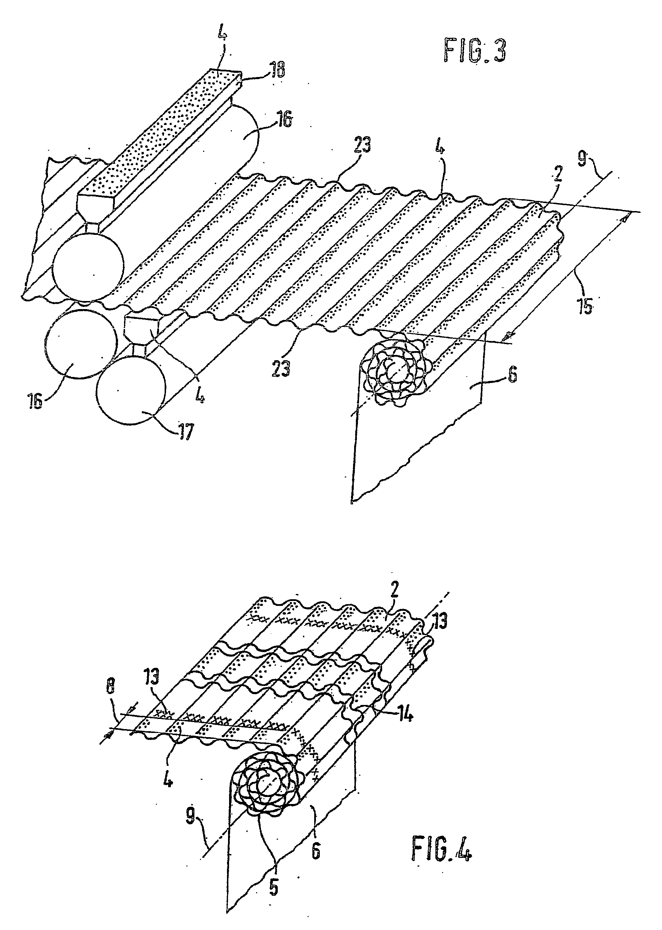

Fig. 3 zeigt eine Möglichkeit, wie der Leim 4 auf eine strukturierte Folie 2 aufgetragen werden kann. Hierzu wird die strukturierte Folie 2 zwischen zwei gering voneinander beabstandete Verteilerrollen 16 hindurchgeführt. Dabei kontaktiert die strukturierte Folie 2 die Verteilerrollen 16 lediglich mit ihren Extrempunkten 23 (Wellentäler und Wellenberge), so dass eine definierte Leimstreifenbreite generiert wird. Die in der Fig. 3 oben dargestellte Verteilerrolle 16 ist direkt mit einer Zufuhr 18 versehen, mittels derer der Leim 4 auf die Oberfläche der Verteilerrolle 16 aufgebracht wird. Die Zufuhr 18 bedient sich dabei der Schwerkraft. Die unterhalb der strukturierten Folie 2 angeordnete Verteilerrolle wird mittels einer Walze 17 auf ihrer Umfangsfläche mit Leim 4 benetzt, wobei die Walze 17 mit einer Zufuhr 18 ausgestattet ist. Bei der dargestellten Vorrichtung entsprechen die Verteilerrollen 16 in etwa der Länge 15 der strukturierten Folie 2. Insofern wird auch Leim innerhalb der Leimstreifenbreite über die gesamte Länge 15 vorgesehen.

An dieser Stelle sei darauf hingewiesen, dass dem Fachmann eine Vielzahl von Fertigungstechniken zur Herstellung derartiger Leimstreifen bekannt sind. Neben der dargestellten Vorrichtung, bei der der Leimauftrag mittels Verteilerrollen 16 erfolgt, ist beispielsweise auch die Verwendung von Sprühdüsen, Klebestreifen od. dgl. bekannt. Dabei kann auf eine Vielzahl von mechanischen Vorrichtungen und/oder physikalischen Grundprinzipen zurückgegriffen werden, wobei hier beispielhaft auch bestimmte Kapillareffekte, die Schwerkraft, Druck oder ähnliches zur Verfügung steht.

Die beleimte strukturierte Folie 2 wird anschließend mit einer glatten Folie 6 zusammengeführt, wobei durch ein spiraliges Aufwickeln um eine Achse 9 eine Wabenstruktur gebildet wird.

Fig. 4 zeigt den Wickelvorgang einer bereits beleimten strukturierten Folie 2 und einer glatten Folie 6, wobei diese Folien zusammengeführt und wiederum spiralig um eine Achse 9 aufgewickelt werden. Im Gegensatz zu der in Fig. 3 dargestellten strukturierten Folie 2 ist die Beleimung nicht über die gesamte Länge 15 (nicht gekennzeichnet) ausgeführt. Dabei weist die strukturierte Folie 2 zwei Teilbereiche 8 auf, die sich ausgehend von den Stirnseiten 5 hin zum inneren Bereich der strukturierten Folie 2 hin erstrecken. Die Teilbereiche 8 sind durch eine Sekundärstruktur begrenzt. Diese Sekundärstruktur hat die Wirkung, dass die Wellhöhe um einen vorgegebenen Wert reduziert wird, so dass gerade im Hinblick auf die oben gezeigte Vorrichtung mit Verteilerrollen 16, der Kontakt mit diesen Verteilerrollen 16 unterbrochen wird. Insofern erfolgt in den Bereichen mit der Sekundärstruktur keine Benetzung der strukturierten Folie 2 mit Leim 4.

Weiterhin weist die strukturierte Folie 2 in einem mittleren bzw. zentralen Bereich einen weiteren Teilbereich 8 auf, wobei hierbei die Ausdehnung in Richtung der Achse 9 mittels einer Passivierungsschicht 14 begrenzt ist. Die Passivierungsschicht kann vor oder nach dem Beleimen der strukturierten Folie 2 aufgetragen werden.

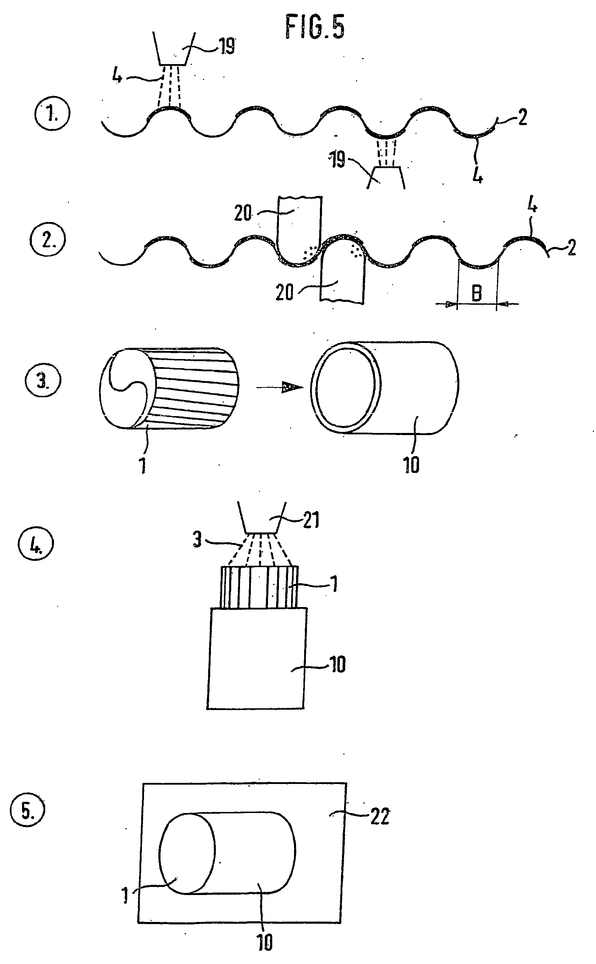

Fig. 5 zeigt schematisch eine Ausgestaltung des erfindungsgemäßen Verfahrens. Gemäß dem ersten Schritt wird die strukturierte Folie 2 mit einem Leim 4 benetzt. Dieser Vorgang wird mittels zweier Düsen 19 durchgeführt, die auf den gegenüberliegenden Seiten der strukturierten Folie 2 angeordnet sind. Dabei generiert die Düse 19 bzw. eine entsprechende Vorrichtung jeweils Leimstreifen auf den Wellenbergen bzw. den Wellentälern der strukturierten Folie 2.

Schritt 2. zeigt schematisch einen Reinigungsschritt, der den über die Leimstreifenbreite B hinausragenden Anteil des Leims 4 von der strukturierten Folie 2 entfernt. Hinsichtlich der Mittel, welche während dieses Reinigungsschrittes eingesetzt werden können, kann der Fachmann wiederum auf eine Vielzahl von Alternativen bzw. Kombinationen davon zurückgreifen. Bei der Verwendung bzw. Auswahl von chemischen Substanzen, abrasiven Medien oder mechanischen Werkzeugen ist insbesondere auf die notwendige Fertigungsgenauigkeit abzustellen. In der Fig. 5 zeigen die Reinigungsmittel 20 beispielsweise ein paar mit Lösungsmittel getränkte Polierscheiben, welche den überschüssigen Leim, der zur Anlagerung von unerwünschten Lotkörnern führen würde, entfernt.

Die vorbehandelten strukturierten Folien 2 werden mit glatten Folien 6 (nicht dargestellt) gestapelt und anschließend S-förmig gewunden, wie dies skizzenhaft in Schritt 3. dargestellt ist. Die so vorbereitete Wabenstruktur 1 wird teilweise in ein Gehäuse 10 eingeführt.

Im Schritt 4. ist der Belotungsprozess dargestellt, wobei hier die Zufuhr von pulverförmigem Lot 3 mittels einer Belotungsvorrichtung 21 erfolgt. Die Belotungsvorrichtung 21 kann beispielsweise mit einer Düse ausgeführt sein, welche das pulverförmige Lot 3 in die inneren Bereiche der Wabenstruktur 1 hineinbefördert. Dabei kann die Zufuhr in Richtung der Schwerkraft erfolgen oder entgegengesetzt, indem der Wabenkörper 1 und das Gehäuse 10 zumindest teilweise in ein mit Lotpulver gefülltes Wirbelbett eingetaucht werden. Erfolgt eine gleichzeitige Belotung der äußeren Umfangsfläche der Wabenstruktur 1 ist dort nach dem Wickelvorgang bzw. nach dem Einführen der Wabenstruktur in das Gehäuse 10 eine zusätzliche Leimschicht aufzutragen, so dass später auch an der Umfangsfläche der Wabenstruktur 1 Lot 3 haften bleibt.

Schließlich wird die Wabenstruktur 1 vollständig in das Gehäuse 10 eingeführt und in einem Ofen 22 einer thermischen Behandlung (dem Lötprozess) unterworfen (vgl. Schritt 5.). Bevorzugt wird dabei die Ausbildung von Lotverbindungen zwischen den Folien miteinander bzw. zwischen den Folien und dem Gehäuse 10 mittels des sogenannten Hochtemperatur-Vakuum-Lötverfahrens durchgeführt.

Die Erfindung ermöglicht somit die Herstellung eines Wabenkörpers bzw. einer Trägermatrix für eine katalytisch aktive Beschichtung, welche der chemischen Umsetzung von im Abgas enthaltenen Schadstoffen automobiler Verbrennungskraftmaschinen geeignet ist. Somit wird durch die vorgeschlagene minimale Leimstreifenbreite eine dauerhafte Verbindung trotz der dort herrschenden thermischen und dynamischen Beanspruchungen sichergestellt, wobei gleichzeitig die übermäßige Verwendung von Lotmaterial vermieden wird. Daraus resultieren einerseits Kostenvorteile im Hinblick auf die Herstellung einer solchen Wabenstruktur, gleichzeitig wird aber auch die Prozesssicherheit im Rahmen der Fertigung und die Lebensdauer derartiger Wabenstrukturen erhöht.

**Bezugzeichenliste**

| 1 | Wabenstruktur |
|---|---|
| 2 | Strukturierte Folie |
| 3 | Lot |
| 4 | Leim |
| 5 | Stirnseite |
| 6 | Glatte Folie |
| 7 | Kanal |
| 8 | Teilbereich |
| 9 | Achse |
| 10 | Gehäuse |
| 11 | Kontaktbereich |
| 12 | Foliendicke |
| 13 | Sekundärstruktur |
| 14 | Passivierungsschicht |
| 15 | Länge |
| 16 | Verteilerrolle |
| 17 | Walze |
| 18 | Zufuhr |
| 19 | Düse |
| 20 | Reinigungsmittel |
| 21 | Belotungsvorrichtung |
| 22 | Ofen |
| 23 | Extrempunkt |
| 24 | Flanke |
| 25 | Zwickel |

| B | Leimstreifenbreite |
|---|---|
| D | Lotdurchmesser |
| L | Lotstreifenbreite |
| P | Pitch |
| W | Wellhöhe |
| Z | Zusatzbreite |

**Patentansprüche**

1. Verfahren zum Beleimen und Beloten einer Wabenstruktur (1) umfassend mindestens eine zumindest teilweise strukturierte Folie (2) mit einem Pitch (P) und einer Wellhöhe (W) umfassend folgende Schritte:

   - Auswahl eines mittleren Lotdurchmessers (D) eines pulverförmigen Lots (3), der betragsmäßig kleiner als 15% der Wellhöhe (W) ist;
   - Beleimen wenigstens der zumindest teilweise strukturierten Folie (2) innerhalb der Leimstreifenbreite (B) auf mindestens einem Teil von durch die Wellung gebildeten Wellenbergen;
- Beloten der Wabenstruktur (1), und **dadurch gekennzeichnet, daß** eine minimale Leimstreifenbreite (B) nach der Gleichung

$$B = 2 \cdot \sqrt{D \cdot \left[\frac{1}{4} \cdot \frac{P}{W} - 0,0156\right]}$$

bestimmt wird.

2. Verfahren nach Anspruch 1, bei dem die Leimstreifenbreite (B) um eine Zusatzbreite (Z) vergrößert wird, wobei die Zusatzbreite (Z) in einem Bereich zwischen $0,2 \cdot D < Z < D$ liegt.

3. Verfahren nach Anspruch 1 oder 2, bei dem die Leimstreifenbreite (B) mittels eines Korrekturwertes K bestimmt wird, der in einem Bereich von $0\ mm < K < 1\ mm$ liegt, und von der Leimstreifenbreite (B) abgezogen oder hinzugefügt wird.

4. Verfahren nach einem der vorhergehenden Ansprüche, bei dem die zumindest teilweise strukturierte Folie (2) zunächst mit dem Leim (4) versehen, dann eine Wabenstruktur (1) ausgebildet und später ein stirnseitiges (5) Beloten der Wabenstruktur (1) vorgenommen wird.

5. Verfahren nach Anspruch 4, bei dem die Wabenstruktur (1) mittels mindestens einer zusätzlichen glatten Folie (6) gebildet wird, wobei die mindestens eine strukturierte (2) und die mindestens eine glatte Folie (6) so gestapelt und/oder gewunden werden, dass für ein Fluid durchströmbare Kanäle (7) gebildet werden.

6. Verfahren nach einem der vorhergehenden Ansprüche, bei dem die Leimstreifenbreite (B) kleiner als 1,75 mm ist, insbesondere kleiner 1 mm, und bevorzugt kleiner 0,5 mm.

7. Verfahren nach einem der vorhergehenden Ansprüche, bei dem die Beleimung der Wabenstruktur (1) nur über mindestens einen Teilbereich (8) in Richtung einer Achse (9) der Wabenstruktur (1) vorgenommen wird.

8. Verfahren nach einem der vorhergehenden Ansprüche, bei dem der Leim (4), welcher sich außerhalb der Leimstreifenbreite (B) angesammelt hat, vor dem Beloten in einem Reinigungsschritt entfernt wird.

9. Verfahren nach einem der vorhergehenden Ansprüche, bei dem der Leim (4) zwei gezielt einstellbare Hafteigenschaften aufweist, die jeweils wiederholbar aktivierbar bzw. deaktivierbar sind, wobei:

- eine adhäsive Hafteigenschaft des Leims (4), welcher sich außerhalb der Leimstreifenbreite (B) angesammelt hat, vor dem Beloten deaktiviert wird und/oder
- eine adhäsive Hafteigenschaft des Leims (4), welcher sich innerhalb der Leimstreifenbreite (B) angesammelt hat, vor dem Beloten aktiviert wird.

10. Verfahren nach einem der vorhergehenden Ansprüche, bei dem ein mittlerer Lotdurchmessers (D) des pulverförmigen Lots (3) zwischen 40 μm und 120 μm verwendet wird.

11. Verfahren nach einem der vorhergehenden Ansprüche, bei dem nach dem Beloten bzw. nach einer anschließenden thermischen Behandlung der Wabenstruktur (1) eine Lotstreifenbreite (L) generiert wird, die im wesentlichen gegenüber der Leimstreifenbreite (B) nur eine Toleranz von maximal 10%, bevorzugt von maximal 5%, hat und insbesondere nicht größer als die Leimstreifenbreite (B) ist.

12. Verfahren nach einem der vorhergehenden Ansprüche, bei dem die Wabenstruktur (1) vor dem Beloten zumindest teilweise in ein Gehäuse (10) eingebracht wird.

13. Wabenstruktur (1) umfassend zumindest teilweise strukturierte Folien (2), so dass für ein Fluid durchströmbare Kanäle (7) mit einem Pitch (P) und einer Wellhöhe (W) gebildet sind, wobei in Kontaktbereichen (11) der Folien (1, 2) miteinander innerhalb einer Leimstreifenbreite (B) Leim und ein pulverförmiges Lot (3) mit einem mittleren Lotdurchmesser (D) vorgesehen ist, **dadurch gekennzeichnet, dass** die Leimstreifenbreite (B) und der Lotdurchmesser (D) im wesentlichen dem folgenden Zusammenhang entsprechen:

$$B = 2 \cdot \sqrt{D \cdot \left[\frac{1}{4} \cdot \frac{P}{W} - 0,0156\right]} \ .$$

14. Wabenstruktur (1) nach Anspruch 13, wobei die Wabenstruktur (1) bevorzugt auch glatte Folien (6) umfasst, **dadurch gekennzeichnet, dass** die Folien (2,6) eine Foliendicke (12) kleiner 180 μm, insbesondere kleiner 100 μm und bevorzugt kleiner 40 μm haben.

15. Wabenstruktur (1) nach Anspruch 13 oder 14, **dadurch gekennzeichnet, dass** die Wellhöhe (W) zwischen 4 mm und 0,5 mm beträgt.

16. Wabenstruktur (1) nach einem der Ansprüche 13 bis 15, **dadurch gekennzeichnet, dass** der Pitch (P) zwischen 6 mm und 0,8 mm beträgt.

17. Wabenstruktur (1) nach einem der Ansprüche 13 bis 16, **dadurch gekennzeichnet, dass** dieser eine Kanaldichte größer 600 cpsi hat, insbesondere sogar größer 800 cpsi.

18. Wabenstruktur (1) nach einem der Ansprüche 13 bis 17, **dadurch gekennzeichnet, dass** wenigstens eine Folie (2,6) eine Sekundärstruktur (13) aufweist, welche einen Teilbereich (8) definiert und die Ausdehnung der Leimstreifenbreite (B) in Richtung einer Achse (9) der Wabenstruktur (1) begrenzt.

19. Wabenstruktur (1) nach einem der Ansprüche 13 bis 18, **dadurch gekennzeichnet, dass** wenigstens eine Folie (2,6) eine Passivierungsschicht aufweist, welche einen Teilbereich (8) definiert und die Ausdehnung der Leimstreifenbreite (B) in Richtung einer Achse (9) der Wabenstruktur (1) begrenzt.

**Claims**

1. A method for applying adhesive and brazing material to a honeycomb structure (1) comprising at least one at least partially structured foil (2) having a pitch (P) and a wave height (W) comprising the following steps:

   - selection of an average brazing material diameter (D) of a powderous brazing material (3) which is smaller than 15% of the wave height (W) in size;
   - application of adhesive at least to the at least partially structured foil (2) within the adhesive strip width (B) on at least some corrugation peaks which are formed by the corrugation;
   - application of brazing material to the honeycomb structure (1), and

   **characterized in that** a minimum adhesive strip width (B) according to the equation

   $$B = 2 \cdot \sqrt{D \cdot \left[ \frac{1}{4} \cdot \frac{P}{W} - 0.0156 \right]}$$

   is determined.

2. The method as claimed in claim 1, in which the adhesive strip width (B) is enlarged by an additional width (Z), the additional width (Z) being in a range between $0.2 \cdot D < Z < D$.

3. The method as claimed in claim 1 or 2, in which the adhesive strip width (B) is determined by means of a correction value (K) which lies in a range from 0 mm < K < 1 mm, and is subtracted from or added to the adhesive strip width (B).

4. The method as claimed in one of the preceding claims, in which the at least partially structured foil (2) is firstly provided with the adhesive (4), a honeycomb structure (1) is then formed and later brazing material is applied to the end side (5) of the honeycomb structure (1).

5. The method as claimed in claim 4, in which the honeycomb structure (1) is formed by means of at least one additional smooth foil (6), the at least one structured foil (2) and the at least one smooth foil (6) being stacked and/or wound in such a way that passages (7) through which a fluid can flow are formed.

6. The method as claimed in one of the preceding claims, in which the adhesive strip width (B) is less than 1.75 mm, in particular less than 1 mm, and preferably less than 0.5 mm.

7. The method as claimed in one of the preceding claims, in which the application of the adhesive to the honeycomb structure (1) is performed only over at least a region (8) in the direction of an axis (9) of the honeycomb structure (1).

8. The method as claimed in one of the preceding claims, in which the adhesive (4), which has collected outside the adhesive strip width (B) is removed in a cleaning step before the application of brazing material.

9. The method as claimed in one of the preceding claims, in which the adhesive (4) has two adhesive properties which can be adjusted selectively and which can each be activated or deactivated in a repeatable fashion,

   - an adhesive property of the adhesive (4) which has collected outside the adhesive strip width (B) being deactivated before the application of brazing material and/or
   - an adhesive property of the adhesive (4) which has collected inside the adhesive strip width (B) being activated before the application of brazing material.

10. The method as claimed in one of the preceding claims, in which an average brazing material diameter (D) of the powderous brazing material (3) be-

tween 40 μm and 120 μm is used.

11. The method as claimed in one of the preceding claims, in which, after the application of brazing material or after subsequent thermal treatment of the honeycomb structure (1), a brazing material strip width (L) is generated which essentially has only a tolerance of at maximum 10%, preferably at maximum 5%, in comparison with the adhesive strip width (B), and in particular is not larger than the adhesive strip width (B).

12. The method as claimed in one of the preceding claims, in which the honeycomb structure (1) is introduced at least partially into a housing (10) before the application of brazing material.

13. A honeycomb structure (1) comprising at least partially structured foils (2) so that passages (7) through which a fluid can flow and which have a pitch (P) and a wave height (W) are formed, adhesive and a powderous brazing material (3) with an average brazing material diameter (D) being provided in regions (11) of contact between the foils (1, 2) within an adhesive strip width (B), **characterized in that** the adhesive strip width (B) and the brazing material diameter (D) correspond essentially to the following relationship:

$$B = 2 \cdot \sqrt{D \cdot \left[ \frac{1}{4} \cdot \frac{P}{W} - 0.0156 \right]} .$$

14. The honeycomb structure (1) as claimed in claim 13, the honeycomb structure (1) also preferably comprising smooth foils (6), **characterized in that** the foils (2, 6) have a foil thickness (12) of less than 180 μm, in particular less than 100 μm and preferably less than 40 μm.

15. The honeycomb structure (1) as claimed in claim 13 or 14, **characterized in that** the wave height (W) is between 4 mm and 0.5 mm.

16. The honeycomb structure (1) as claimed in one of claims 13 to 15, **characterized in that** the pitch (P) is between 6 mm and 0.8 mm.

17. The honeycomb structure (1) as claimed in one of claims 13 to 16, **characterized in that** it has a passage density of more than 600 cpsi, in particular even more than 800 cpsi.

18. The honeycomb structure (1) as claimed in one of claims 13 to 17, **characterized in that** at least one foil (2, 6) has a secondary structure (13) which defines a region (8) and delimits the extent of the adhesive strip width (B) in the direction of an axis (9) of the honeycomb structure (1).

19. The honeycomb structure (1) as claimed in one of claims 13 to 18, **characterized in that** at least one foil (2, 6) has a passivation layer which defines a region (8) and delimits the extent of the adhesive strip width (B) in the direction of an axis (9) of the honeycomb structure (1).

**Revendications**

1. Procédé pour garnir d'adhésif et de brasure une structure en nids d'abeilles (1), comportant au moins une feuille (2) au moins partiellement structurée, avec un pas (P) et une hauteur d'ondulation (W), comportant les étapes suivantes :

    - choix d'un diamètre de brasure (D) moyen d'une brasure en forme de poudre (3) qui quant à sa grandeur est plus petit que 15 % de la hauteur d'ondulation (W) ;
    - garnir d'adhésif au moins la feuille au moins partiellement structurée (2) à l'intérieur de la largeur de bande adhésive (B) sur au moins une partie de crêtes d'ondes formées par l'ondulation ;
    - garnir de brasure la structure en nids d'abeilles (1), et **caractérisé en ce qu'**une largeur minimale de bande adhésive (B) est déterminée selon l'équation

$$B = 2 \cdot \sqrt{D \cdot \left[ \frac{1}{4} \cdot \frac{P}{W} - 0.0156 \right]} .$$

2. Procédé selon la revendication 1, dans lequel la largeur de bande adhésive (B) est agrandie d'une largeur supplémentaire (Z), la largeur supplémentaire (Z) se trouvant dans une gamme entre $0.2 \cdot D < Z < D$.

3. Procédé selon la revendication 1 ou 2, dans lequel la largeur de bande adhésive (B) est déterminée au moyen d'une valeur de correction K qui se trouve dans un intervalle de 0 mm < K < 1 mm et qui est déduite de ou ajoutée à la largeur de bande adhésive (B).

4. Procédé selon l'une des revendications précédentes, dans lequel la feuille (2) au moins partiellement structurée est d'abord garnie d'adhésif (4), une structure en nids d'abeilles (1) est ensuite formée et un garnissage frontal (5) de brasure de la structure en nids d'abeilles (1) est effectué plus tard.

**5.** Procédé selon la revendication 4, dans lequel la structure en nids d'abeilles (1) est formée au moyen d'au moins une feuille lisse (6) supplémentaire, l'au moins une feuille structurée 2 et l'au moins une feuille lisse (6) étant empilées et/ou tordues de manière telle que des canaux (7) sont formés à travers lesquels un fluide peut s'écouler.

**6.** Procédé selon l'une des revendications précédentes, dans lequel la largeur de bande adhésive (B) est plus petite que 1,75 mm, notamment plus petite que 1 mm, et de préférence plus petite que 0,5 mm.

**7.** Procédé selon l'une des revendications précédentes, dans lequel le garnissage d'adhésif de la structure en nids d'abeilles (1) n'est effectué que sur au moins une région partielle (8) en direction d'un axe (9) de la structure en nids d'abeilles (1).

**8.** Procédé selon l'une des revendications précédentes, dans lequel l'adhésif (4) s'étant accumulé à l'extérieur de la largeur de bande adhésive (B), est éliminé en une étape de nettoyage avant le garnissage de brasure.

**9.** Procédé selon l'une des revendications précédentes, dans lequel l'adhésif (4) a deux propriétés adhésives ajustables sélectivement qui peuvent chacune être activées ou désactivées de façon répétable, dans quel cas :

- une propriété adhésive de l'adhésif (4) qui s'est accumulé à l'extérieur de la largeur de bande adhésive (B) est désactivée avant le garnissage de brasure
et/ou
- une propriété adhésive de l'adhésif (4), qui s'est accumulé à l'intérieur de la largeur de bande adhésive (B), est activée avant le garnissage de brasure.

**10.** Procédé selon l'une des revendications précédentes, dans lequel on utilise un diamètre de brasure moyen (D) de la brasure en forme de poudre (3) entre 40 $\mu$m et 120 $\mu$m.

**11.** Procédé selon l'une des revendications précédentes, dans lequel une largeur de bande adhésive (L) est générée après le garnissage de brasure ou après un traitement thermique subséquent de la structure en nids d'abeilles (1), laquelle largeur de bande adhésive n'a par rapport à la largeur de bande adhésive (B) sensiblement qu'une tolérance d'au maximum 10 %, de préférence d'au maximum 5 % et qui n'est notamment pas plus grande que la largeur de bande adhésive (B).

**12.** Procédé selon l'une des revendications précédentes, dans lequel la structure en nids d'abeilles (1) est introduite au moins partiellement dans un boîtier (10) avant le garnissage de brasure.

**13.** Structure en nids d'abeilles (1) comportant des feuilles (2) au moins partiellement structurées, de sorte que des canaux (7) pouvant être traversés par un fluide avec un pas (P) et une hauteur d'ondulation (W) sont formés, dans quel cas dans des régions de contact (11) des feuilles (1, 2) entre elles de l'adhésif et une brasure en forme de poudre (3) ayant un diamètre de brasure moyen (D) est prévue à l'intérieur d'une largeur de bande adhésive (B), **caractérisée en ce que** la largeur de bande adhésive (B) et le diamètre de brasure (D) correspondent essentiellement à l'équation suivante :

$$B = 2 \cdot \sqrt{D \cdot \left[\frac{1}{4} \cdot \frac{P}{W} - 0.0156\right]} .$$

**14.** Structure en nids d'abeilles (1) selon la revendication 13, dans quel cas la structure en nids d'abeilles (1) comporte de préférence aussi des feuilles lisses (6), **caractérisée en ce que** les feuilles (2, 6) ont une épaisseur (12) plus petite que 180 $\mu$m, notamment plus petite que 100 $\mu$m et de préférence plus petite que 40 $\mu$m.

**15.** Structure en nids d'abeilles (1) selon la revendication 13 ou 14, **caractérisée en ce que** la hauteur d'ondulation (W) comporte entre 4 mm et 0,5 mm.

**16.** Structure en nids d'abeilles (1) selon l'une des revendications 13 à 15, **caractérisée en ce que** le pas (P) comporte entre 6 mm et 0,8 mm.

**17.** Structure en nids d'abeilles (1) selon l'une des revendications 13 à 16, **caractérisée en ce que** celle-ci a une densité de canal plus grande que 600 cpsi, notamment même plus grande que 800 cpsi.

**18.** Structure en nids d'abeilles (1) selon l'une des revendications 13 à 17, **caractérisée en ce qu'**au moins une feuille (2, 6) a une structure secondaire (13), qui définit une région partielle (8) et qui limite l'étendue de la largeur de bande adhésive (B) en direction d'un axe (9) de la structure en nids d'abeilles (1).

**19.** Structure an nids d'abeilles (1) selon l'une des revendications 13 à 18, **caractérisée en ce qu'**au moins une feuille (2, 6) a une couche de passivation qui définit une région partielle (8) et qui limite l'étendue de la largeur de bande adhésive (B) en direction

**EP 1 463 599 B1**

d'un axe (9) de la structure en nids d'abeilles (1).

L

2

6

1

10

7

5

**FIG.1**

P

B

Z

24

2

7

W

23

11    12    25    6    3    4    23

D

**FIG.2**

FIG.3

FIG.4

# FIG.5